# EUROPÄISCHE PATENTSCHRIFT

(11) **EP 2 741 002 B1**
(45) Veröffentlichungstag und Bekanntmachung des Hinweises auf die Patenterteilung: **05.08.2020**
(21) Anmeldenummer: 13195541.1
(22) Anmeldetag: 03.12.2013
(51) Int. Cl.: F23N 1/02, G05D 11/13

(54) **Vorrichtung und Verfahren zur redundanten Bestimmung des Mengendurchflusses eines fluiden Mediums in einer Regelstrecke**
Device and method for redundant determination of the flow of a fluid medium in a controlled system
Dispositifs et procédé pour la determination redondante du débit d'un fluide dans un système de régulation

(30) Priorität: 04.12.2012 DE 102012023749
(43) Veröffentlichungstag der Anmeldung: 11.06.2014
(73) Patentinhaber: Messer Austria GmbH, 2352 Gumpoldskirchen (AT)
(72) Erfinder: Demuth, Dr. Martin, 2352 Gumpoldskirchen (AT)
(74) Vertreter: Münzel, Joachim R.

(56) Entgegenhaltungen:
- DE-A1- 3 713 542
- DE-A1- 10 215 672
- DE-A1-102009 031 944
- US-A1- 2003 233 203
- US-A1- 2008 105 317
- US-B1- 6 945 123

## Beschreibung

Die Erfindung betrifft eine Vorrichtung zum Regeln des Mengendurchflusses eines fluiden Mediums in einer Regelstrecke mit den Merkmalen des Anspruchs 2 1. Die Erfindung betrifft des Weiteren ein Verfahren zur redundanten Bestimmung des Mengendurchflusses eines fluiden Mediums gemäß den Merkmalen des Anspruchs 1.

Bei der Zuführung fluider Medien an einen Verbraucher werden definierte Mengendurchflüsse üblicherweise mit Regelstrecken zur Verfügung gestellt, die mit einem Durchflussmesser und einem motor- oder elektropneumatisch getriebenen, ansteuerbaren Regelventil ausgerüstet sind. Der am Durchflussmesser ermittelte Wert für den Durchfluss des flüssigen oder gasförmigen Mediums wird einer Steuereinheit, beispielsweise einer speicherprogrammierbaren Steuereinheit (SPS), übermittelt, die eine Soll-Ist-Vergleichsauswertung durchführt und den Ist-Durchfluss über eine Ansteuerung des Regelventils auf den geforderten Sollwert einstellt. Übliche Durchflussmesser arbeiten dabei insbesondere durch Erfassung des Volumendurchflusses (Beispiel: Schwebkörper-Durchflussmesser), durch Erfassung des Massendurchflusses (Beispiel: Coriolis - Massendurchflussmesser oder thermische Massendurchflussmesser) oder durch Erfassen des Wirkdrucks (Beispiel: Messblende).

Speziell für Brennerregelstrecken ist es nach der Norm EN 746-2 2010 erforderlich, dass der Brenneranordnung Brennstoff und Oxidationsmittel in einem genau definierten Mengenverhältnis zur Verfügung gestellt werden, um ein vorgegebenes Verbrennungsluftverhältnis einzuhalten. Insbesondere wird eine kontinuierliche Überwachung des Verbrennungsluftverhältnisses gefordert. Die bekannten Messverfahren sind jedoch Ungenauigkeiten und Fehlern unterworfen, die über einen längeren Betriebszeitraum eine Einhaltung der Norm in Frage stellen. Es ist daher erforderlich, die Messanordnung in regelmäßigen Zeitabständen zu überprüfen und gegebenenfalls nachzukalibrieren. Systematische Fehler, sowie während des laufenden Betriebs plötzlich auftretende Fehler an der Messapparatur können auf diese Weise jedoch nicht erkannt werden.

Um beständig eine zuverlässige Information über den Mengendurchfluss des fluiden Mediums zu erhalten ist es daher sinnvoll, den Durchfluss redundant mit wenigstens zwei unabhängig voneinander arbeitenden Durchflussmessern zu erfassen, wobei es sich empfiehlt, dass die beiden Durchflussmesser nach unterschiedlichen Messprinzipien arbeiten, um Fehler, die auf dem Messprinzip beruhen, ausschließen zu können. Eine solche Anordnung ist allerdings sehr aufwändig in der Montage und kostenintensiv und kann insbesondere als Nachrüstung bereits vorhandener Anlagen häufig kaum realisiert werden.

Aus der DE 10 2006 051 883 A1 ist eine Einrichtung zum Einstellen, Steuern oder Regeln des Brennstoff/Verbrennungsluft-Verhältnisses eines Brenners bekannt. Die Einrichtung weist in der Brennstoffzuführung eine doppelte Durchflusserfassung auf, die eine erste, stoffwertabhängige Durchfluss-Messeinrichtung in Form einer Messblende sowie eine zweite, stoffwertunabhängige Durchfluss-Messeinrichtung in Form eines Flügelradzählers umfasst. Weiterhin werden Temperatur und Druck in der Brennstoffzuleitung erfasst. Die beiden unterschiedlichen Messverfahren dienen bei diesem Gegenstand vorwiegend dazu, aus den beiden Messungen ein Maß für die Dichte des gasförmigen Brennstoffs zu gewinnen. Auf diese Weise kann bei einer Änderung in der Zusammensetzung und damit der Dichte des Brennstoffs rasch eine Nachjustierung des Brennstoffzustroms erfolgen mit dem Ziel, die Luftzahl im Verbrennungsvorgang stets auf einem vorgegebenen Wert zu halten. Da die Dichte des Mediums als unbekannte und zu ermittelnde Größe in die Messung eingeht, ist mit dieser Anordnung eine redundante Messung des Mengendurchflusses nicht möglich. Auch führt die serielle Anordnung der Durchflusserfassungssysteme zu nicht unbeträchtlichen Strömungsdruckverlusten.

Das Dokument US2008/0105317 A1 beschreibt ein Verfahren und eine Vorrichtung zur redundanten Bestimmung des Mengendurchflusses eines fluiden Mediums.

Der Erfindung liegt daher die Aufgabe zu Grunde, eine Möglichkeit zur redundanten Erfassung des Mengendurchflusses in einer Regelstrecke zu schaffen, die mit einem geringen apparativen Aufbau zu bewältigen ist, zu möglichst geringen Strömungsverlusten in der Regelstrecke führt und insbesondere leicht auch in bestehende Regelstrecken eingebaut werden kann.

Gelöst ist diese Aufgabe durch ein Verfahren mit den Merkmalen des Patentanspruchs 1 sowie durch eine Vorrichtung mit den Merkmalen des Patentanspruchs 2. Vorteilhafte Ausführungsformen sind in den Unteransprüchen angegeben.

Erfindungsgemäß wird also das in einer Regelstrecke zum Zuführen eines fluiden Mediums an einen Verbraucher ohnehin vorhandene Regelventil (Stellventil) zur redundanten Erfassung des Mengendurchflusses genutzt. Dabei wird der Umstand ausgenutzt, dass am Regelventil ein erheblicher Druckabfall innerhalb der Zuleitung auftritt, der eine Mengendurchflusserfassung nach dem Messblendenprinzip erlaubt. Um den Mengendurchfluss am Regelventil - bei bekannter Dichte des fluiden Mediums - zuverlässig erfassen zu können, ist in der Regel die Kenntnis des Vorund Hinterdrucks am Regelventil, des Ventilhubs, des Durchflusskoeffizienten beim jeweiligen Ventilhub erforderlich. Im Falle einer überkritischen Strömung, in der sich der Druck am Regelventil auf mehr als die Hälfte reduziert, genügt in der Regel bereits die laufende Messung des Vordrucks und des Hubs, da in diesem Fall der Hinterdruck nicht mehr relevant ist. Die Werte des Vor- und Hinterdrucks sowie des Ventilhubs werden kontinuierlich oder in vorgegebenen Zeitabständen erfasst und der Steuereinheit zugeleitet. In der Steuereinheit liegt eine Kennlinie der ventilspezifischen Abhängigkeit des Durchflusskoeffizienten vom Ventilhub vor, die aus theoretischen oder empirischen Daten gewonnen und bereits vor der Betriebsaufnahme in die Steuereinheit eingegeben wurde. Aus den gemessenen Werten für den Vordruck, den Hinterdruck und den Ventilhub sowie aus dem Durchflusskoeffizienten beim jeweiligen Ventilhub wird ein zweiter Wert für den Mengendurchfluss gewonnen, mittels dessen der von der Durchflussmesseinrichtung ermittelte Wert auf Plausibilität überprüft werden kann. Auf diese Weise werden Fehler bei der Durchflusserfassung leichter erkannt und damit verbundene Probleme vermieden.

Selbstverständlich muss zur Erfassung des Mengendurchflusses am Regelventil die Dichte des fluiden Mediums bekannt sein; um Fehler infolge einer temperaturbedingten Dichteänderung ausschließen zu können, empfiehlt sich eine Einrichtung zur Erfassung der Temperatur des fluiden Mediums, die in der Regelstrecke stromauf zum Regelventil montiert ist und die der Steuereinheit zwecks Bestimmung einer temperaturabhängigen Dichte kontinuierlich oder in vorgegebenen Zeitabständen Werte für die Temperatur des fluiden Mediums übermittelt.

Als "Verbraucher" soll hier ganz allgemein eine Einrichtung verstanden werden, der der Strom des fluiden Mediums zugeleitet wird und bei denen eine möglichst zuverlässige Kenntnis des Mengendurchflusses des fluiden Mediums bestehen soll. Insbesondere handelt es sich beim Verbraucher um eine Zuführungseinrichtung für ein gasförmiges oder flüssiges Medium in einen metallurgischen oder chemischen Behandlungsraum, beispielsweise um eine Injektionslanze oder einen Brenner. Insbesondere ermöglicht die Erfindung eine zuverlässige redundante Bestimmung des Mengendurchflusses in Brennerregelstrecken, die leicht auch in vorhandenen Regelstrecken nachgerüstet werden kann. Dabei ist die erfindungsgemäße Anordnung sowohl mit der Regelstrecke für den Brennstoff oder mit der Regelstrecke für das Oxidationsmittel oder auch mit beiden Regestrecken vorgesehen.

Als Durchflussmesseinrichtung kann jedes übliche Instrument zur Massen- oder Volumendurchflusserfassung zum Einsatz kommen, beispielsweise ein Schwebkörperdurchflussmessgerät, ein thermische Durchflussmessgeräte oder ein Coriolis - Durchflussmessgerät. Erfindungsgemäß, um das Auftreten systematischer Fehler weiter zu reduzieren empfiehlt es sich jedoch, dass die Durchflussmesseinrichtung nach einem anderen Prinzip arbeitet als nach dem Messblendenprinzip (Wirkdruckverfahren), da dieses bei der Durchflusserfassung am Regelventil zur Anwendung kommt. Bei der Steuereinheit handelt es sich bevorzugt um eine speicherprogrammierbare Steuereinheit.

Gemäß dem erfindungsgemäßen Verfahren zur redundanten Bestimmung des Mengendruchflusses eines fluiden Mediums in einer Regelstrecke zur Zuführung von Oxidationsmittel und/oder Brennstoff an eine Brenneranordnung, wird also der Vordruck und der Hinterdruck am Regelventil sowie der Hub des Regelventils erfasst und die erfassten Werte an die Steuereinheit übermittelt. Dort werden die so erfassten Werte, zusammen mit in der Steuereinheit eingegebenen Werten für den Durchflusskoeffizienten am Regelventil in Abhängigkeit vom Ventilhub, zur Berechnung eines zweiten Wertes für den Mengendurchfluss des gasförmigen oder flüssigen Mediums verwendet. Die Werte für den Durchflusskoeffizienten liegen entweder bereits als Herstellerangabe vor, oder sie können leicht vor Betriebsaufnahme der Regelstrecke empirisch ermittelt werden und in die Steuereinheit vor oder während des Betriebs der Steuereinheit eingegeben werden. Gegebenenfalls wird zudem die Temperatur bzw. die Dichte des fluiden Mediums erfasst und in die Berechnung des Mengendurchflusses einbezogen.

Erfindungsgemäß werden die beiden ermittelten Werte für den Mengendurchfluss in der Steuereinheit miteinander verglichen werden und bei Überschreiten einer vorgegebenen Differenz zwischen beiden Werten ein Warnsignal abgegeben wird. Bei dem Warnsignal kann es sich beispielsweise um ein akustisches oder optisches Warnsignal handeln, das eine Bedienperson auf die Diskrepanz zwischen den beiden ermittelten Werten für den Mengendurchfluss hinweist, oder aber um ein Steuersignal zur Ansteuerung einer Armatur, mit der beispielsweise der Verbraucher vorübergehend außer Betrieb gesetzt wird, bis die Ursache für die Störung behoben worden ist.

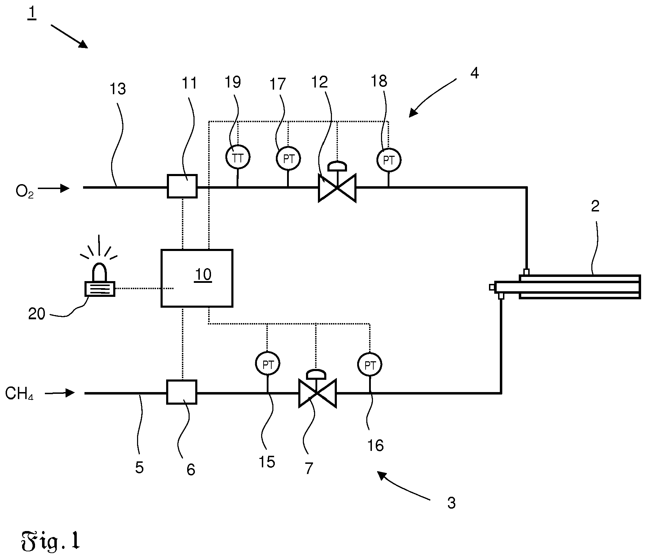

Anhand der Zeichnung soll ein Ausführungsbeispiel der Erfindung näher erläutert werden. Die einzige Zeichnung (Fig. 1) zeigt vereinfacht eine Anordnung zum geregelten Versorgen eines Brenners mit Brennstoff und mit Oxidationsmittel.

Die Anordnung 1 zum Versorgen eines Brenners 2 umfasst jeweils eine Regelstrecke 3 für Brennstoff und eine Regelstrecke 4 für Oxidationsmittel. Als Brennstoff kommt im Ausführungsbeispiel Erdgas zum Einsatz, im Rahmen der Erfindung sind jedoch auch andere gasförmige oder flüssige brennbare Medien als Brennstoff einsetzbar. Als Oxidationsmittel kommt im Ausführungsbeispiel Sauerstoff, beispielsweise Sauerstoff mit einer Reinheit von über 95 Vol.-% zum Einsatz, es kann sich dabei jedoch auch um Luft oder ein mit Sauerstoff angereichertes Gas handeln.

Die Regelstrecke 3 für Brennstoff umfasst eine Zuleitung 5, in der eine Einrichtung 6 zur Durchflussmessung sowie ein ansteuerbares, motor- oder elektropneumatisch betriebenes Regelventil 7 angeordnet ist. Bei der Einrichtung 6 zur Durchflussmessung handelt es sich um eine an sich bekannte Einrichtung, beispielsweise um einen Schwebekörper-, Coriolis- oder thermischen Durchflussmesser, jedoch sollte es sich dabei nicht um eine Messblende handeln.

Sowohl die Einrichtung 6 als auch das Regelventil 7 stehen mit einer elektronischen Steuereinheit 10, beispielsweise einer SPS, in Datenverbindung. An der Einrichtung 6 wird ein Istwert für den Durchfluss des Brennstoffs kontinuierlich oder in vorgegebenen Zeitabständen erfasst und der Steuereinheit 10 zugeleitet. In der Steuereinheit 10 wird der gemessene Wert mit einem in der Steuereinheit 10 vor Inbetriebnahme einprogrammierten oder während eines Betriebsprogramms laufend errechneten Sollwert für den Durchfluss verglichen. Weichen Istwert und Sollwert voneinander ab, wird von der Steuereinheit 10 ein Steuersignal an den Antrieb des Regelventils 7 abgegeben und das Regelventil 7 entsprechend nachgestellt.

Ganz ähnlich dazu umfasst die Regelstrecke 4 für Oxidationsmittel eine Einrichtung 11 zur Durchflussmessung sowie ein ansteuerbares, ebenfalls motor- oder elektropneumatisch betriebenes Regelventil 12, die längs einer Oxidationsmittelzuleitung 13 angeordnet sind. Die Oxidationsmittelzuleitung 13 ist in hier nicht gezeigter Weise an eine Sauerstoffversorgung angeschlossen, bei der es sich beispielsweise um eine Sauerstoff-Rohrleitung handeln kann, oder um eine Einrichtung zur Luftzerlegung oder um eine Tankanlage, die einen Tank für verflüssigten Sauerstoff und einen diesem nachgeschalteten Verdampfer umfasst. Bei der Einrichtung 11 zur Durchflussmessung handelt es sich ebenfalls um eine an sich bekannte Einrichtung, beispielsweise um einen Schwebekörper-, Coriolis-, oder thermische Durchflussmesser, jedoch sollte es sich auch hier nicht um eine Messblende handeln. Auch die Einrichtung 11 sowie das Regelventil 12 stehen mit der elektronischen Steuereinheit 10 in Datenverbindung. Die Regelung des Oxidationsmitteldurchflusses in der Regelstrecke 4 erfolgt in der gleichen Weise wie oben bei der Regelung des Brennstoffdurchflusses in der Regelstrecke 3 beschrieben. Die Steuereinheit 10 regelt in Abhängigkeit der an sie übertragenen Werte für die Durchflussmengen von Oxidationsmittel und Brennstoff auch das Brennstoff-/Luftverhältnis durch entsprechende Ansteuerung der Regelventile 7, 12, beispielsweise derart, dass ein bestimmter Wert für die Luftzahl λ während einer Betriebsphase des Brenners konstant gehalten wird.

Um einen zuverlässigen Wert für die jeweiligen Durchflussmengen zu erhalten, wird in der Anordnung 1 der Durchfluss von Oxidationsmittel und Brennstoff durch die Zuleitung redundant erfasst. Hierzu wird zusätzlich zu dem an den Durchflussmesseinrichtungen 6, 11 ermittelten Werten jeweils ein von diesen unabhängiger zweiter Messwert für den Durchfluss des Brennstoffs bzw. des Oxidationsmittels erfasst. Die Erfassung der zweiten Messwerte erfolgt jeweils unter Ausnutzung des am jeweiligen Regelventil 7, 12 auftretenden Druckabfalls nach dem Messblendenprinzip.

Um den zweiten Messwert für den Durchfluss des Brennstoffstromes durch die Zuleitung 3 zu erhalten, sind stromauf bzw. stromab zum Regelventil 7 jeweils Druckmesseinrichtungen 15, 16 zur Messung des Vordrucks (15) bzw. des Hinterdrucks (16) am Regelventil vorgesehen, die mit der Steuereinheit 10 in Datenverbindung stehen und an diese die an den Druckmesseinrichtung 15, 16 erfassten Druckwerte übermitteln. Weiterhin wird ein Wert für den Ventilhub des Regelventils 7 erfasst und gleichfalls der Steuereinheit 10 zugeleitet. In der Steuereinheit 10 liegen ferner Werte einer Kennlinie des Durchflusskoeffizienten des Regelventils 7 in Abhängigkeit vom Ventilhub vor. Die Werte dieser Kennlinie wurden vor Inbetriebnahme aufgrund von Herstellerangaben in die Steuereinheit 10 eingegeben oder in einer zuvor durchgeführten Messreihe empirisch ermittelt. In der Steuereinheit 10 wird aus den gemessenen Werten des Vordrucks, des Hinterdrucks des Ventilshub und des Durchflusskoeffizienten ein Wert für den Durchfluss des Brennstoffs durch die Zuleitung 3 ermittelt, der mit dem an der Einrichtung 6 gemessenen Wert verglichen werden kann.

Stromauf bzw. stromab zum Regelventil 12 sind gleichfalls Druckmesseinrichtungen 17, 18 eingebaut, um einen zweiten Messwert für den Durchfluss des Oxidationsmittelstromes durch die Oxidationsmittelzuleitung 13 zu erhalten. Bei den Druckmesseinrichtungen 17, 18 handelt es sich um eine Druckmesseinrichtung 17 zur Messung des Vordrucks und um eine Druckmesseinrichtung 18 zur Messung des Hinterdrucks am Regelventil 13. Auch die Druckmesseinrichtungen 17, 18 sind mit der Steuereinheit 10 datenverbunden und übermitteln an diese die von ihnen erfassten Druckwerte. Weiterhin wird der Ventilhub des Regelventils 13 erfasst und gleichfalls der Steuereinheit 10 zugeleitet. In der Steuereinheit 10 liegen ferner Werte einer Kennlinie des Durchflusskoeffizienten des Regelventils 12 in Abhängigkeit vom Ventilhub vor. In der Steuereinheit wird aus den gemessenen Werten des Vordrucks, des Hinterdrucks des Ventilhub und des Durchflusskoeffizienten ein Wert für den Durchfluss des Oxidationsmittels durch die Oxidationsmittelzuleitung 13 ermittelt, der mit dem an der Einrichtung 11 gemessenen Wert verglichen werden kann. Aus der Kenntnis des Durchflusskoeffizienten in Abhängigkeit vom Ventilhub lässt sich im Übrigen der für die Anpassung des Istwerts an den Sollwert des Mengendurchflusses erforderliche Ventilhub exakt vorausberechnen, wodurch die Regelgeschwindigkeit erhöht werden kann.

Weiterhin umfasst die Regelstrecke 4 einen Temperaturtransmitter 19, der gleichfalls mit der Steuereinheit 10 in Datenverbindung steht und dieser laufend oder in vorgegebenen Zeitabständen die Temperatur des Oxidationsmittels übermittelt. Auf diese Weise können Änderungen der Dichte, die aufgrund einer Temperaturänderung des fluiden Mediums eintreten, erfasst und in die Berechnung des Massendurchflusses am Regelventil 12 einbezogen werden. Derartige temperaturbedingte Dichteschwankungen können insbesondere bei einer Versorgung aus einer Quelle für flüssigen Sauerstoff auftreten, bei dessen Verdampfung eine gleichbleibende Temperatur des entstehenden gasförmigen Sauerstoffs nicht immer gewährleistet werden kann. Ein entsprechender Temperaturtransmitter kann bei Bedarf im Übrigen auch in der Regelstrecke 3 für den Brennstoff vorgesehen sein.

Bei erheblichen Abweichung der beiden jeweils für den Durchfluss des Brennstoffs bzw. des Oxidationsmittelermittelten Werte von beispielsweise mehr als 5% wird von einer mit der Steuereinheit 10 datenverbundenen Warneinrichtung 20 ein Warnsignal abgegeben, das eine Bedienperson auf das Vorliegen einer Störung aufmerksam macht.

Mit der Erfindung wird eine einfache und preiswerte Möglichkeit geschaffen, den Mengendurchfluss eines gasförmigen oder flüssigen in einer Regelstrecke redundant zu bestimmen. Die erfindungsgemäße Anordnung lässt sich problemlos auch in bereits vorhandene Regelstrecken einbauen.

### Bezugszeichenliste

- 1.: Anordnung
- 2.: Brenner
- 3.: Regelstrecke (für Brennstoff)
- 4.: Regelstrecke (für Oxidationsmittel)
- 5.: Zuleitung
- 6.: Einrichtung zur Durchflussmessung
- 7.: Regelventil
- 8.: -
- 9.: -
- 10.: Steuereinheit
- 11.: Einrichtung zur Durchflusserfassung
- 12.: Regelventil
- 13.: Oxidationsmittelzuleitung
- 14.: -
- 15.: Druckmesseinrichtung (Vordruck Regelventil Brennstoff)
- 16.: Druckmesseinrichtung (Hinterdruck Regelventil Brennstoff)
- 17.: Druckmesseinrichtung (Vordruck Regelventil Oxidationsmittel)
- 18.: Druckmesseinrichtung (Hinterdruck Regelventil Oxidationsmittel)
- 19.: Temperaturtransmitter
- 20.: Warneinrichtung

## Patentansprüche

1. Verfahren zur redundanten Bestimmung des Mengendurchflusses eines fluiden Mediums in einer Regelstrecke (3, 4) zur Zuführung von Oxidationsmittel und/oder Brennstoff an eine Brenneranordnung (2), die eine mit einer Durchflussmesseinrichtung (6, 11) zur Bestimmung eines ersten Wertes für den Mengendurchfluss und einem Regelventil (7, 12) ausgerüstete Zuleitung (5, 13) aufweist, bei dem an der Durchflussmesseinrichtung (6, 11) kontinuierlich oder in vorgegebenen Zeitabständen ein erster Wert für den Mengendurchfluss erfasst und einer Steuereinheit (10) zugeleitet wird, wobei die Bestimmung des ersten Wertes nach einem anderen Prinzip als dem Messblendenprinzip arbeitet,
wobei der Vordruck und der Hinterdruck am Regelventil (7, 12) sowie der Hub des Regelventils (7, 12) erfasst und die erfassten Werte der Steuereinheit (10) übermittelt werden und in der Steuereinheit (10) aus den erfassten Werten des Vordrucks, des Hinterdrucks, des Hubs sowie eingegebenen oder übermittelten Werten für den Durchflusskoeffizienten des Regelventils (7, 12) ein zweiter Wert für den Mengendurchfluss des fluiden Mediums am Regelventil (7, 12) berechnet wird, wobei
die beiden ermittelten Werte für den Mengendurchfluss in der Steuereinheit (10) miteinander verglichen werden und bei Überschreiten einer vorgegebenen Differenz zwischen beiden Werten ein Warnsignal abgegeben wird.

2. Vorrichtung zur redundanten Bestimmung des Mengendurchflusses eines fluiden Mediums, mit einer Regelstrecke (3, 4), die zur Zuführung von Oxidationsmittel und/oder Brennstoff an eine Brenneranordnung (2) einbaubar ist, mit einer in einer Zuleitung (5, 13) der Regelstrecke (3, 4) integrierten Durchflussmesseinrichtung (6, 11) zur Messung des Mengendurchflusses des fluiden Mediums, wobei die Durchflussmesseinrichtung nach einem anderen Prinzip als nach dem Messblendenprinzip arbeitet, mit einem Regelventil (7, 12) zur Begrenzung des Mengendurchflusses des fluiden Mediums in der Zuleitung (5, 13) sowie einer Steuereinheit (10) zur Einstellung des Regelventils (7, 12) in Abhängigkeit von an der Durchflussmesseinrichtung (6, 11) gemessenen Werten des Mengendurchflusses durch die Zuleitung (5, 13),
wobei in der Zuleitung (5, 13), zusätzlich zur Durchflussmesseinrichtung (6, 11), Mittel zur Messung des Vordrucks und des Hinterdrucks am Regelventil (7, 12) sowie Mittel zur Erfassung des Ventilhubs vorgesehen sind, die mit der Steuereinheit (10) in Datenverbindung stehen, und die Steuereinheit (10) Mittel zum Bestimmen eines Wertes für den Mengendurchfluss des fluiden Mediums nach dem Messblendenprinzip aus den gemessenen Werten des Vordrucks, des Hinterdrucks, des Ventilhubs sowie aus in der Steuereinheit (10) eingegebenen Werten für den Durchflusskoeffizienten des Regelventils (7, 12) umfasst.

3. Vorrichtung nach Anspruch 2, **dadurch gekennzeichnet, dass** in der Regelstrecke (3,4), stromauf zum Regelventil (7,12), eine mit der Steuereinheit (10) in Datenverbindung stehende Einrichtung (19) zur Erfassung der Temperatur des fluiden Mediums vorgesehen ist.

4. Vorrichtung nach Anspruch 2 oder 3, **dadurch gekennzeichnet, dass** als Steuereinheit (10) eine speicherprogrammierbaren Steuereinheit vorgesehen ist.

## Claims

1. Method for the redundant determination of the mass flow rate of a fluid medium in a controlled system (3, 4) for feeding oxidizing agent and/or fuel to a burner arrangement (2) which has a feedline (5, 13) which is equipped with a through-flow-measuring device (6, 11) for determining a first value for the mass flow rate and a control valve (7, 12), in which a first value for the mass flow rate is detected continuously or at predefined time intervals on the through-flow-measuring device (6, 11) and is fed to a control unit (10), wherein the determination of the first value operates according to a principle other than the measuring orifice principle, wherein the system pressure and the back pressure at the control valve (7, 12) and the stroke of the control valve (7, 12) are detected and the detected values are fed to the control unit (10), and in the control unit (10) a second value for the mass flow rate of the fluid medium at the control valve (7, 12) is calculated from the detected values of the system pressure, the back pressure, the stroke and input or fed-in values for fluid-flow coefficients of the control valve (7, 12), wherein
the two determined values for the mass flow rate are compared with one another in the control unit (10), and where a predefined difference between the two values is exceeded a warning signal is output.

2. Device for the redundant determination of the mass flow rate of a fluid medium, with a controlled system (3, 4) which can be installed for feeding oxidizing agent and/or fuel to a burner arrangement (2), with a through-flow-measuring device (6, 11), which is integrated in a feedline (5, 13) of the controlled system (3, 4) and has the purpose of measuring the mass flow rate of the fluid medium, wherein the through-flow-measuring device operates according to another principle than according to the measuring orifice principle, with a control valve (7, 12) for limiting the mass flow rate of the fluid medium in the feedline (5, 13) and a control unit (10) for adjusting the control valve (7, 12) in accordance with values of the mass flow rate through the feedline (5, 13), which are measured at the through-flow-measuring device (6, 11),
wherein means for measuring the system pressure and the back pressure at the control valve (7, 12) and means for detecting the valve stroke are provided in the feedline (5, 13) in addition to the through-flow-measuring device (6, 11), which means have a data-transmitting connection to the control unit (10), and the control unit (10) comprises means for determining a value for the mass flow rate of the fluid medium according to the measuring orifice principle, from the measured values of the system pressure, the back pressure, the valve stroke and from values for the through-flow coefficients of the control valve (7, 12) which are input in the control unit (10).

3. Device according to Claim 2, **characterized in that** a device (19) which has a data-transmitting connection to the control unit (10) and has the purpose of detecting the temperature of the fluid medium is provided in the controlled system (3, 4), upstream of the control valve (7, 12).

4. Device according to Claim 2 or 3, **characterized in that** a programmable logic control unit is provided as the control unit (10).

## Revendications

1. Procédé pour la détermination redondante du débit massique d'un milieu fluide dans une section de régulation (3, 4) pour l'alimentation en comburant et/ou en combustible d'un système de combustion (2) qui comporte une conduite d'alimentation (5, 13) équipée d'un dispositif de mesure de débit (6, 11) pour la détermination d'une première valeur pour le débit massique et d'une vanne de régulation (7, 12), dans lequel une première valeur pour le débit massique est détectée au niveau du dispositif de mesure de débit (6, 11) en continu ou à des intervalles de temps prédéterminés et est envoyée à une unité de commande (10), dans lequel la détermination de la première valeur fonctionne selon un principe autre que le principe du diaphragme de mesure, dans lequel la pression amont et la pression aval au niveau de la vanne de régulation (7, 12) ainsi que la course de la vanne de régulation (7, 12) sont détectées et les valeurs détectées sont transmises à l'unité de commande (10), et une deuxième valeur pour le débit massique du fluide au niveau de la vanne de régulation (7, 12) est calculée dans l'unité de commande (10) à partir des valeurs détectées de la pression amont, de la pression aval, de la course, ainsi que de valeurs fournies en entrée ou transmises pour le coefficient de débit de la vanne de régulation (7, 12), dans lequel
les deux valeurs déterminées pour le débit massique sont comparées l'une à l'autre dans l'unité de commande (10) et un signal d'avertissement est émis lorsqu'une différence prédéterminée entre les deux valeurs est dépassée.

2. Dispositif pour la détermination redondante du débit massique d'un milieu fluide, comportant une section de régulation (3, 4) qui peut être installée pour l'alimentation en comburant et/ou en combustible d'un dispositif de combustion (2), comportant un dispositif de mesure de débit (6, 11) intégré dans une conduite d'alimentation (5, 13) de la section de régulation (3, 4) pour la mesure du débit massique du milieu fluide, dans lequel le dispositif de mesure de débit fonctionne selon un principe autre que le principe du diaphragme de mesure, comportant une vanne de régulation (7, 12) pour limiter le débit massique du fluide dans la conduite d'alimentation (5, 13) ainsi qu'une unité de commande (10) pour régler la vanne de régulation (7, 12) en fonction de valeurs mesurées, au niveau du dispositif de mesure de débit (6, 11), du débit massique à travers la conduite d'alimentation (5, 13),
dans lequel il est prévu dans la conduite d'alimentation (5, 13), outre le dispositif de mesure de débit (6, 11), des moyens pour la mesure de la pression amont et de la pression aval au niveau de la vanne de régulation (7, 12) ainsi que des moyens pour la détection de la course de la vanne, qui sont en communication de données avec l'unité de commande (10), et l'unité de commande (10) comprend des moyens pour la détermination d'une valeur pour le débit massique du milieu fluide selon le principe du diaphragme de mesure à partir des valeurs mesurées de la pression amont, de la pression aval, de la course de la vanne ainsi que de valeurs fournies en entrée dans l'unité de commande (10) pour le coefficient de débit de la vanne de régulation (7, 12).

3. Dispositif selon la revendication 2, **caractérisé en ce qu'**il est prévu dans le système de régulation (3, 4), en amont de la vanne de régulation (7, 12), un dispositif (19) en communication de données avec l'unité de commande (10) pour la détection de la température du milieu fluide.

4. Dispositif selon la revendication 2 ou 3, **caractérisé en ce qu'**il est prévu en tant qu'unité de commande (10) une unité de commande à mémoire programmable.
